Europäisches Patentamt

European Patent Office

Office européen des brevets

(19)

(11) Publication number: **0 437 806 A2**

## EUROPEAN PATENT APPLICATION

(12)

(21) Application number: **90125153.8**

(51) Int. Cl.⁵: **B60S 1/38**

(22) Date of filing: **21.12.90**

(30) Priority: **08.01.90 US 461745**

(43) Date of publication of application:
**24.07.91 Bulletin 91/30**

(84) Designated Contracting States:
**DE FR GB IT**

(71) Applicant: **ACUSHNET COMPANY**
**Belleville Avenue**
**New Bedford, Massachusetts 02742(US)**

(72) Inventor: **Walder, James F.**
**36 Bramblewood Cross**
**Little Compton, Rhode Island 02837(US)**

(74) Representative: **Kirby, Harold Douglas Benson**
**G.F. Redfern & Company Marlborough Lodge**
**14 Farncombe Road**
**Worthing West Sussex BN11 2BT(GB)**

(54) **Windshield wiper blade.**

(57) The wiper blade is made from an elastomeric composition which contains a fluorocarbon polymer as an essential ingredient therein. The elastomeric composition comprises:
100 parts by weight of rubber composition (phr);
0 to 60 phr of filler;
0 to 25 phr of inorganic base; and
0 to 5 phr of processing aid;
the rubber composition being made up of 50 to 100 phr of a fluorocarbon polymer and 50 to 0 phr of a non-fluorocarbon polymer. Such a blade is found to have improved wear.

# FIG. I.

EP 0 437 806 A2

## WINDSHIELD WIPER BLADE

The present invention relates to windshield wiper blades and, more particularly, to a windshield wiper blade made from an elastomeric composition containing a fluorocarbon polymer.

Conventionally, windshield wiper blades are made from an elastomeric or rubber composition containing natural or synthetic rubber (polyisoprene) and fillers such as carbon black. Other types of elastomers such as neoprene, ethylene propylene diene rubber and polybutadiene have been added to the elastomeric composition; however, most conventional blades are made of predominately natural rubber. After the basic blade is formed, it is generally treated with chlorine for the purpose of hardening the surface of the rubber in order to reduce friction of the wiper blade on the windshield and to reduce wear. Following the chlorination treatment, the blade is sometimes graphited to further reduce friction. The basic blade is then cut to form the wiper blade lip and the complete wiper blade element. U.S. Patent No. 4,045,838 issued September 6, 1977 teaches coating the lip area of the blade with a material having a specific Young's modulus to increase wipe integrity.

Conventional windshield wiper blades have a number of problems. For instance, the lifetime expectancy of natural rubber blades, especially in terms of wipe quality/integrity, is limited. Usually, the sharp edge of a windshield wiper blade lip will show considerable wear after 500,000 sweeps on a windshield. Wipe quality thus deteriorates, resulting in poor visibility for the driver. Another problem is that the chlorine treatment required by natural rubber blades, sometimes referred to as halogenation, is subject to process control variation which may lead to variations in the final product. Also, blades made from natural rubber, because of its chemical structure (unsaturated hydrocarbon), are subject to attack by ozone which cracks the surface of the blade and causes imperfections in the wipe pattern. Additionally, antiozonants that are incorporated in standard natural rubber formulations to defend against ozone attack will sometimes bloom to the surface and affect wipe quality. Furthermore, natural rubber formulations are not particularly heat resistant and will eventually deform and become less pliable on the windshield surface. This is especially noticeable during summertime conditions when temperatures may reach in excess of 65°C in the park position of a windshield wiper blade. This "permanent set" distorts the proper movement of the windshield wiper blade and may create either chatter or non-reversal of the windshield wiper blade lip on the windshield. Also, natural rubber blades, after extended use, may be subject to reversion on the lip area of the blade. This is a chemical phenomenon in which the rubber composition will soften and manifest itself as fouling the windshield or creating a tacky surface. This usually occurs after extended life of the natural rubber blade when the chlorinated surface wears through to the underlying rubber surface that was not chlorinated.

The above noted drawbacks in wiper blades have now, to a certain extent, been solved. It has now been discovered that forming a windshield wiper blade from an elastomeric composition which contains a fluorocarbon polymer produces a more wear resistant blade compared to a blade made from natural rubber. In fact, the blade made in accordance with the present invention has been found to have about a threefold to about a fourfold increase in life. Specifically, it has been found that by using a fluorocarbon polymer in the blade, the blade need not be subject to chlorination treatment. This reduces the number of processing steps employed in making a conventional wiper blade and provides a time savings to the manufacturer. Additionally, the blade made in accordance with the present invention was also found to have better heat set characteristics than a blade made of natural rubber. Also, the blade made in accordance with the present invention did not need antiozonants, such as paraffin waxes and p-phenylene diamines, added to it to perform better than a blade made from natural rubber alone. Additionally, the blade made in accordance with the present invention showed little or no tendency toward lip reversion.

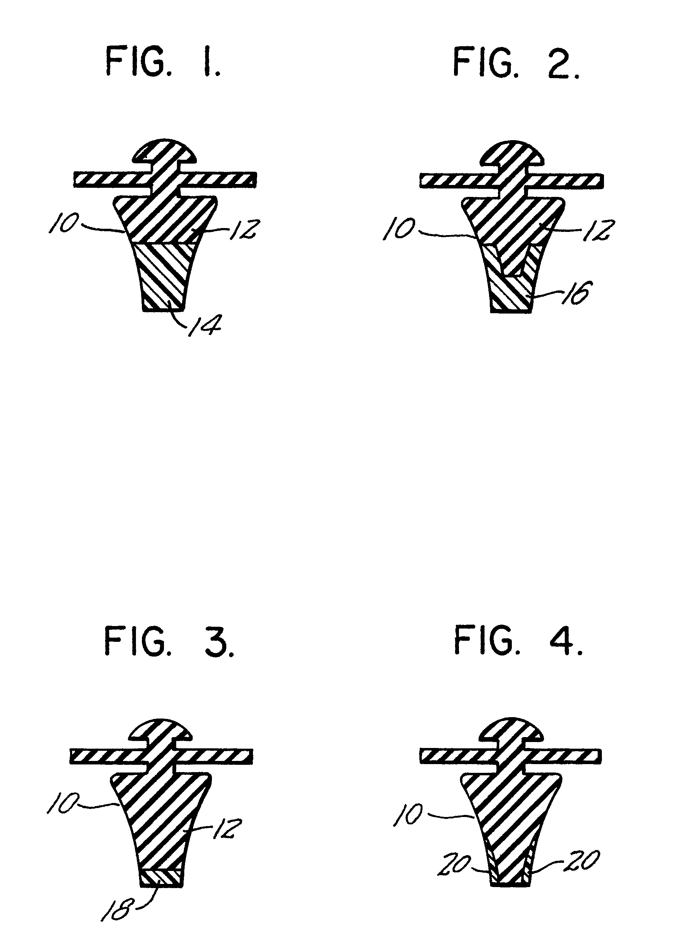

Figs. 1-4 illustrate alternatives to making the complete blade out of the elastomeric composition of the present invention.

A windshield wiper blade made in accordance with the present invention is made from an elastomeric composition comprising a rubber composition and fillers wherein an essential ingredient in said rubber composition is a fluorocarbon polymer. Preferably, the rubber composition contains a fluorocarbon polymer in an amount of at least about 50 parts by weight based on 100 parts by weight of the rubber composition (phr). More preferably, the rubber composition contains about 70 phr to about 100 phr of a fluorocarbon polymer. Good results have been obtained with a wiper blade containing about 100 phr of fluorocarbon polymer.

Suitable fluorocarbon polymers for use in the present invention include copolymers and terpolymers such as a copolymer of vinylidene fluoride and hexafluoropropylene which is sold under the trade names Fluorel by 3M, Viton A by DuPont, Tecnoflon by Montedison, Dai-El by Daikin; a terpolymer of vinylidene fluoride, hexafluoropropylene and tetrafluoroethylene sold under the trade names Viton B by DuPont and Dai-El G-501 by Daikin; a terpolymer of vinylidene fluoride, hexafluoropropylene and tetrafluoroethylene sold under the trade name Viton GF by DuPont; a terpolymer of vinylidene fluoride, tetrafluoroethylene and perfluoroalkyl vinyl ether sold under the trade name Viton GLT by DuPont; a copolymer of tetrafluoroethylene and perfluoromethyl vinyl ether sold under the trade name Kalrez by DuPont; a copolymer of tetrafluoroethylene and propylene sold under the trade name Aflas 100, 150, by 3M; a copolymer of vinylidene fluoride and chlorotrifluoroethylene sold under the trade name Kel-F 3700 by 3M; a copolymer of vinylidene fluoride and 1-hydropentafluoropropylene sold under the trade name Tecnoflon SL by Montedison; and a terpolymer of vinylidene fluoride, 1-hydropentafluoropropylene and tetrafluoroethylene sold under the trade name Tecnoflon T by Montedison.

As is known to those of skill in the art, fluorocarbon polymers are formed conventionally by a high pressure, free radical aqueous emulsion polymerization technique. Initiators such as organic or inorganic peroxides are typically used in the process. The molecular weight of the resulting polymers is conventionally controlled by the amount of initiator to monomer and/or choice of chain transfer reagents such as carbon tetrachloride, methanol, and acetone.

Some fluorocarbon polymers are sold with incorporated-cure systems. Incorporated-cure systems generally comprise a quaternary phosphonium salt cure accelerator, such as Curative 20 sold by DuPont, and a diphenol cross-linking agent, such as Curative 30 sold by DuPont. If the fluorocarbon polymer has an incorporated-cure system, then no additional curing system need be added to the elastomeric composition.

If the fluorocarbon elastomer does not have an incorporated-cure system, then a cure system, such as diamines sold by DuPont under the trade name Diak, must be added to the elastomeric composition. Peroxide curatives can also be added. The amount of cure system added to the elastomeric composition used in the present invention is between about 1 to about 8 phr and more preferably about 2 to about 6 phr. As is known to those of skill in the art, the cure system must be compatible with the other rubber compounds used to formulate the rubber composition in order to facilitate processing of the elastomeric composition.

Other elastomeric/rubber compounds (non-fluorocarbon polymers) such as silicon-based rubber, terpolymers of ethylene-propylene-diene (EPDM), polyisoprene, butadiene, neoprene and mixtures thereof, all of which are susceptible to peroxide curing agents, can be added in an amount of about 50 to about 0 phr and more preferably about 30 to about 0 phr to the rubber composition. As is known to those of skill in the art, the addition of these other rubber compounds to the rubber composition requires other adjustments to the elastomeric composition.

Inorganic bases are added to the elastomeric composition of the present invention in an amount of about 0 to about 25 phr, and more preferably in an amount of about 2 to about 20 phr. Even more preferred is to include about 6 to about 12 phr of an inorganic base or a mixture of inorganic bases in the elastomeric composition of the present invention. Inorganic bases used in the elastomeric composition of the present invention include metal oxides, such as magnesium oxide, zinc oxide, calcium oxide and lead oxide, and metal hydroxides, such as calcium hydroxide.

Fillers are included in the elastomeric composition of the present invention in an amount of about 0 to 60 phr and more preferably in an amount of about 5 to about 40 phr. More preferably, the elastomeric composition of the present invention includes about 10 to about 35 phr of filler. Suitable fillers include carbon black and mineral fillers such as calcium metasilicate, titanium dioxide, and barium sulfate.

Conventional processing aids are also preferably included in the elastomeric composition used to formulate the wiper blade of the present invention. Processing aids are added to the elastomeric composition of the present invention in an amount of about 0 to about 5 phr. More preferably, the amount of processing aids added to the elastomeric composition of the present invention is about 0.01 to about 2 phr. Processing aids which can be used in the present invention are polyethylene, carnauba wax and other synthetic and vegetable waxes.

The blade of the present invention is made in a conventional manner from the elastomeric composition. First, the elastomers with a curing system therein are mixed in a mixer such as an internal mixer, commonly referred to as a Banbury mixer, for about one minute. Then the inorganic bases and fillers are added, mixing is continued and, finally, the processing aids are added. Such mixing is done in a conventional manner. Then windshield wiper blades are molded from the elastomeric composition in a conventional manner such as by compression molding. Conventionally, compression molding takes about 10 minutes at 175° C.

These and other aspects of the present invention may be more fully understood by reference to the following examples.

EXAMPLE 1

This example illustrates making a wiper blade in accordance with the present invention. Table I below shows the elastomeric composition used to make the wiper blade:

### TABLE I

| | (phr) |
|---|---|
| Tecnoflon 65BIA | 100 |
| Calcium Hydroxide | 6 |
| Maglite D (magnesium oxide) | 3 |
| Polyethylene 1702 (processing aid) | 0.2 |
| N990 Thermal Carbon Black | 25 |
| | 134.2 |

Tecnoflon 65BIA is fluorocarbon sold by Montedison.

The components of Table I were mixed in a Banbury mixer for about 10 minutes and strips were taken from the mixture. The strips were then made into wiper blades by placing the strips in a compression mold and closing the mold for 10 minutes at a temperature of 175° C.

### EXAMPLE 2

This example illustrates making a wiper blade with less than 100 phr of fluorocarbon. Table II illustrates the formulation used:

### TABLE II

| | (phr) |
|---|---|
| Fluorel 2260 | 70 |
| Nordel 1070 | 30 |
| Carbon black | 36 |
| Stearic acid | 0.5 |
| Zinc oxide | 1.0 |
| Calcium hydroxide | 2.3 |
| Peroxide (Varox) | 1.3 |
| Curing system (DIAK #7) | 1.2 |

Fluorel 2260 is a fluorocarbon sold by 3M and Nordel 1070 is an EPDM sold by DuPont.

This formulation was used to make a blade in accordance with the process taught in Example 1 above.

### EXAMPLE 3

This example illustrates the improved wear resistance of the blade made in accordance with the present invention compared to a blade made from natural rubber.

Both blades were attached to a device which simulates a vehicular window in the rain. Mounted at the base of a windshield, one wiper arm was equipped with a blade made in accordance with Example 1 while the other wiper arm had a blade made from natural rubber and chlorinated in a conventional manner. Water was applied to the windshield while the blades performed over 1.5 million passes on the windshield, after which both blades were evaluated for wear. On a scale of 1 to 10, with 10 being the highest, the blade of the present invention was rated at 7 while the blade made of natural rubber was rated at 2-3. This rating was based on the visual appearance of the windshield with respect to streaks, smears and lines.

It is possible to use the wiper blade composition of the present invention on just the lip area of the blade or to have the lower half of the blade made from the elastomeric composition of the present invention.

As shown in Fig. 1, blade 10 has an upper half 12 made from a conventional rubber composition used for wiper blades and a comolded lower half 14 which was made from the elastomeric composition of the present invention containing fluorocarbon.

Fig. 2 illustrates blade 10 having upper half 12 made from a conventional rubber composition used for wiper blades on a comolded U-shaped lip edge 16 which was made from the elastomeric composition of the present invention.

Fig. 3 illustrates blade 10 having an upper half 12 made from a conventional rubber composition such as natural rubber and a comolded lower section 18 which is restricted to the very tip of wiper 10.

The process of comolding the elastomeric composition of the present invention to a conventional wiper blade is accomplished in a conventional manner.

Additionally, the lip area of the wiper blade can be coated with the elastomeric composition of the present invention. Fig. 4 illustrates blade 10 with coating 20 along the lip area of the wiper blade. In this case, the coating is applied to the sides of the blade. During manufacturing of the wiper blade, the coating is applied to the blade before cutting. The thickness of the coating will vary and can be easily optimized. A blade made in accordance with the one shown in Fig. 4 is coated in a manner similar to that taught in U.S. Patent No. 4,045,838. The '838 patent teaches coating the lip area of a wiper blade with a material having a specific Young's modulus.

Preferably, when used in the lip areas 14, 16, 18 and 20 shown in Figs. 1-4, the elastomeric composition of the present invention is made of 100 phr of a fluorocarbon elastomer.

It will be understood that the claims are intended to cover all changes and modifications of the preferred embodiments of the invention, herein chosen for the purpose of illustration, which do not constitute a departure from the spirit and scope of the invention.

## Claims

1. A windshield wiper blade made from an elastomeric composition comprising:
   (a) a rubber composition, said rubber composition comprising:
   (a') about 50 to about 100 parts by weight of a fluorocarbon polymer based on 100 parts by weight of said rubber composition (phr); and
   ($a^2$) about 50 to about 0 phr of a non-fluorocarbon polymer;
   (b) about 0 to about 60 phr of a filler;
   (c) about 0 to about 25 phr of an inorganic base; and
   (d) about 0 to about 5 phr of a processing aid.

2. The windshield wiper blade of claim 1 further comprising about 1 to about 8 phr of a cure system.

3. The windshield wiper blade of claim 1 or 2 characterized in that the fluorocarbon polymer is a copolymer or terpolymer selected from the group consisting of a copolymer of vinylidene fluoride and hexafluoropropylene; a terpolymer of vinylidene fluoride, hexafluoropropylene and tetrafluoroethylene; a terpolymer of vinylidene fluoride, hexafluoropropylene and tetrafluoroethylene; a terpolymer of vinylidene fluoride, tetrafluoroethylene and perfluoroalkyl vinyl ether; a copolymer of tetrafluoroethylene and perfluoromethyl vinyl ether; a copolymer of tetrafluoroethylene and propylene; a copolymer of vinylidene fluoride and chlorotrifluoroethylene; a copolymer of vinylidene fluoride and 1-hydropentafluoropropylene; and a terpolymer of vinylidene fluoride, 1-hydropentafluoropropylene and tetrafluoroethylene.

4. The windshield wiper blade of claim 1 or 2 characterized in that the non-fluorocarbon polymer is selected from the group consisting of silicon-based rubber, terpolymers of ethylene-propylene-diene (EPDM), polyisoprene, butadiene, neoprene and mixtures thereof.

5. The windshield wiper blade of claim 1 or 2 characterized in that the inorganic base is selected from the group consisting of magnesium oxide, zinc oxide, calcium oxide and calcium hydroxide.

6. The windshield wiper blade of claim 1 or 2 characterized in that the fillers are selected from the group consisting of carbon black, calcium metasilicate, titanium dioxide and barium sulfate.

7. The windshield wiper blade of claim 1 or 2 characterized in that the processing aids are selected from the group consisting of polyethylene and carnauba wax.

8. A windshield wiper blade characterized in that the lip area of said windshield wiper blade is coated with the elastomeric composition of claim 1 or 2.

9. A windshield wiper blade characterized in that the lip portion of the windshield wiper blade is made from the elastomeric composition of claim 1 or 2.

FIG. 1.

FIG. 2.

FIG. 3.

FIG. 4.